(19)

**Europäisches Patentamt**

**European Patent Office**

**Office européen des brevets**

(11) **EP 3 868 539 B1**

(12) **EUROPEAN PATENT SPECIFICATION**

(45) Date of publication and mention
of the grant of the patent:
**11.09.2024 Bulletin 2024/37**

(21) Application number: **20158354.9**

(22) Date of filing: **19.02.2020**

(51) International Patent Classification (IPC):
**B29C 45/00** *(2006.01)* **B29C 45/16** *(2006.01)*
**B32B 27/08** *(2006.01)* **D06F 39/14** *(2006.01)*
*D06F 37/26* *(2006.01)* *D06F 39/12* *(2006.01)*
*A47L 15/42* *(2006.01)* *B29K 105/26* *(2006.01)*
*B29L 31/34* *(2006.01)* *B29L 31/00* *(2006.01)*

(52) Cooperative Patent Classification (CPC):
**B29C 45/0001; B29C 45/1642;** A47L 15/4246;
A47L 15/4251; A47L 15/4293; B29C 2045/1654;
B29C 2045/1656; B29K 2105/26; B29L 2031/3481;
B29L 2031/712; B29L 2031/722; B32B 2250/03;
B32B 2272/00; D06F 34/28; D06F 39/12;    (Cont.)

(54) **COMPONENT FOR A WATER BEARING APPLIANCE AND METHOD FOR PRODUCING SUCH COMPONENT**

KOMPONENTE FÜR EIN WASSERFÜHRENDES GERÄT UND HERSTELLUNGSMETHODE

COMPOSANT POUR UN APPAREIL DE PALIER À EAU ET PROCÉDÉ DE PRODUCTION D'UN TEL COMPOSANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.08.2021 Bulletin 2021/34**

(73) Proprietor: **ELECTROLUX APPLIANCES AKTIEBOLAG**
**105 45 Stockholm (SE)**

(72) Inventors:
• **SANITA', Massimo**
**33080 Porcia (IT)**
• **CREMA, Luca**
**33080 Porcia (IT)**

(74) Representative: **Electrolux Group Patents AB Electrolux**
**Group Patents**
**S:t Göransgatan 143**
**105 45 Stockholm (SE)**

(56) References cited:
**EP-A1- 1 685 786       EP-B1- 1 685 786**
**WO-A1-2014/152014     IT-A1- TO20 100 445**

JP-A- H08 207 193

• ANONYMOUS: "Moldflow Insight 2017 Help: Co-injection molding overview (Concept)", MOLDFLOW INSIGHT 2017, 2 January 2017 (2017-01-02), XP055696192, Retrieved from the Internet <URL:http://help.autodesk.com/view/MFIA/2017/ENU/?guid=GUID-2B0368FE-6657-48C3-BCFE-6 ECA69B881C2> [retrieved on 20200518]
• PATRICK A WÄGER ET AL: "RoHS regulated Substances in Mixed Plastics from Waste Electrical and Electronic Equipment", ENVIRONMENTAL SCIENCE & TECHNOLOGY, 17 September 2010 (2010-09-17), United States, pages 628 - 635, XP055696633, Retrieved from the Internet <URL:https://www.resource-recovery.net/sites/default/files/empa_2010_rohs_substances_in_mixed_plastic.pdf> [retrieved on 20200519], DOI: 10.1021/es202518n

EP 3 868 539 B1

(52) Cooperative Patent Classification (CPC): (Cont.)
D06F 39/14

**Description**

The present invention concerns the production of components for water bearing appliances, in particular components for laundry or dish washing machines or driers.

Specifically, the invention relates to an aesthetic component made of polymeric material for washing machines, in particular laundry or dish washing machines. More particularly, the invention relates to a casing component made of polymeric material for laundry or dish washing machines.

**BACKGROUND ART**

Nowadays the use of plastic components in water bearing appliances such as laundry washing machines or laundry washing-drying machines or driers or dish washing machines, is widespread.

Components made of plastic typically comprise washing tubs, external casings of the machines or part thereof, like for example a user control panel, a filter door, a door frame, etc.

Known plastic components used in such machines are made of recycled plastic, i.e. waste plastic processed for reuse. However, components made of recycled plastic may worsen the aesthetic appearance of the components themselves and/or negatively affect mechanical properties compare to components made of not recycled plastic.

Nevertheless, all efforts aimed at using recycled materials are highly appreciated.

Documents JP H08 207193 A, EP 1 685 786 B1 and WO 2014/152014 A1 disclose examples of components comprising recycled plastic.

It is an object of the invention to optimize aesthetics and/or mechanics characteristics of plastic components for water bearing appliances on the base of the type of plastic material used in the producing process.

It is another object of the invention to implement a water bearing appliance component which has reduced production cost compared to known water bearing appliance components.

It is a further object of the invention to implement a water bearing appliance that reduces the environmental impact in terms of plastic materials used for its production.

**DISCLOSURE OF INVENTION**

Applicant has found that by providing a component for a water bearing appliance comprising a recycled polymeric material, it is possible to reach the mentioned objects with a component according to claim 1 and a method according to claim 12. Advantageous further developments are subject-matter of the dependent claims.

In a first aspect thereof the present invention relates, therefore, to an aesthetic component for a water bearing appliance, wherein the component comprises a first polymeric material and a second polymeric material, the external surface of said component being at least partially constituted by said first polymeric material and said first polymeric material covering said second polymeric material, wherein said second polymeric material comprises a recycled polymeric material.

An aesthetic component is a component having a surface visible from outside when said component is assembled on the laundry/dish washing machine. Advantageously, the component of the invention may be manufactured with low cost thanks to the use of a recycled material.

Still advantageously, the use of recycled materials to produce the component reduces the environmental impact in terms of plastic materials consumption and in terms of re-use/recycling of waste plastic materials.

In a preferred embodiment of the invention, the first polymeric material comprises a not recycled polymeric material.

Advantageously, the aesthetic appearance of the component is significantly improved thanks to the use of a not recycled material, namely the external layer of first polymeric material.

According to a preferred embodiment of the invention, the external surface of the component is completely constituted by the first polymeric material and the first polymeric material completely covers the second polymeric material.

Preferably, the first polymeric material and/or the second polymeric material comprises polymers.

In a preferred embodiment of the invention, the first polymeric material and/or the second polymeric material comprises a thermoplastic material.

Preferably, the recycled material derives from post-consumer plastic and/or post-industrial plastic materials.

In a preferred embodiment of the invention, said recycled material comprises a polymeric material comprising one or more chemical elements of the group comprising the following chemical elements: Lead; Cadmium; Mercury; Hexavalent Chromium; Bromine; Antimony; Arsenic; wherein said one or more chemical elements can be found in a quantity inside said recycled material above, or equal to, a minimum threshold.

Said minimum threshold for Lead is 7 ppm and/or said minimum threshold for Cadmium is 5 ppm and/or said minimum threshold for Mercury is 0.01 ppm and/or said minimum threshold for Hexavalent Chromium is 10 ppm and/or said minimum threshold for Bromine is 5 ppm and/or said minimum threshold for Antimony is 5 ppm and/or said minimum threshold for Arsenic is 5 ppm.

In a preferred embodiment of the invention, said one or more chemical elements can be found in a quantity inside said recycled material below, or equal to, a maximum threshold.

When the recycled material derives from polyolefin polymers, said maximum threshold for Lead is 60 ppm and/or said maximum threshold for Cadmium is 20 ppm and/or said maximum threshold for Mercury is 0.5 ppm and/or said maximum threshold for Hexavalent Chromium is 20 ppm and/or said maximum threshold for Bromine is 60 ppm and/or said maximum threshold for Antimony is 50 ppm and/or said maximum threshold for Arsenic is 50 ppm.

When the recycled material derives from Styrenic polymers, said maximum threshold for Lead is 90 ppm and/or said maximum threshold for Cadmium is 40 ppm and/or said maximum threshold for Mercury is 10 ppm and/or said maximum threshold for Hexavalent Chromium is 100 ppm and/or said maximum threshold for Bromine is 100 ppm and/or said maximum threshold for Antimony is 200 ppm and/or said maximum threshold for Arsenic is 200 ppm. Advantageously, impurity chemical elements falling within these maximum thresholds guarantee a good standard in term of mechanical properties (stiffness, strength, etc) to the component.

Advantageously, the first polymeric material and said the polymeric material form a one-piece monolithic body.

In a preferred embodiment of the invention, the first polymeric material and the second polymeric material are co-injected material resulting from co-injection moulding process.

Co-injection moulding process is a polymer injection technology in which different polymers are injected, one after the other, into the same mould.

Advantageously, co-injection moulding process provides a cost-effective solution when two materials needs to be linked one to the other.

Preferably, said component is one of: a casing component of said water bearing appliance, a control panel of said water bearing appliance.

According to the invention, the water bearing appliance is preferably a water bearing household appliance, more preferably a laundry washing machine or a laundry washing-drying machine or a drier or a dish washing machine.

In a further aspect thereof, the present invention concerns a method for producing an aesthetic component as described above, wherein the method comprises the steps of:

- injecting from at least one injection point said first polymeric material into a cavity of a mould for a first time so that said first polymeric material reaches internal surfaces of said mould and at least partially solidifies to form an external solidified layer;
- injecting from said at least one injection point, after said first time, said second polymeric material into said mould for a second time so that said second polymeric material fills the core of said cavity and pushes the first polymeric material not jet solidified.

In a preferred embodiment of the invention, the second polymeric material pushes the first polymeric material not jet solidified so that the first polymeric material reaches all remaining internal surfaces of said mould where at least partially solidifies and forms an external solidified layer.

In a different preferred embodiment of the invention, the second polymeric material pushes the first polymeric material not jet solidified so that the first polymeric material reaches some remaining internal surfaces of said mould where at least partially solidifies and forms an external solidified layer and so that the second polymeric material reaches all remaining internal surfaces of the mould where at least partially solidifies and forms an external solidified layer. Said method carries out a co-injection moulding process wherein the first polymeric material and the second polymeric material are injected, one after the other, into the same mould.

## BRIEF DESCRIPTION OF THE DRAWINGS

Further characteristics and advantages of the present invention will be highlighted in greater detail in the following detailed description of preferred embodiments, provided with reference to the enclosed drawings. In the drawings, corresponding characteristics and/or components are identified by the same reference numbers. In particular:

- Figure 1 shows a perspective view of a component according to a preferred embodiment of the invention;
- Figure 2 is a cross section along line II°-II° of figure 1;
- Figure 3 is an enlarged view of a detail of figure 2;
- Figure 4 shows a mould used to produce a component according to the invention;
- Figure 5 shows a first phase for producing a component using the mould of figure 4 according to the invention;
- Figure 6 shows a second phase for producing a component using the mould of figure 4 according to the invention;
- Figure 7 shows a final phase for producing a component using the mould of figure 4 according to the invention;

- Figure 8 shows a further embodiment of figure 2 illustrating a component according to a further embodiment of the invention;
- Figure 9 is an enlarged view of a detail of figure 8;
- Figures 10 to 12 show phases for producing the component of figure 8 using the mould of figure 4.

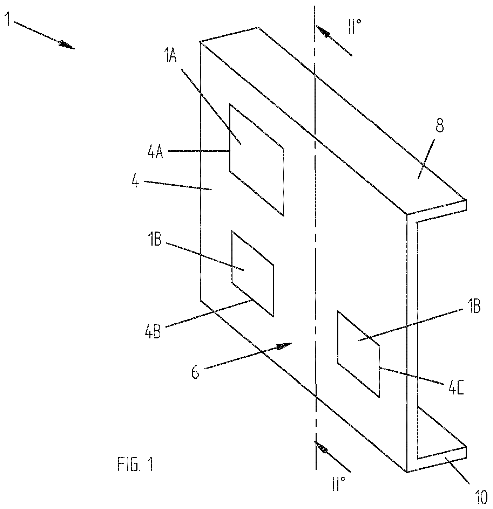

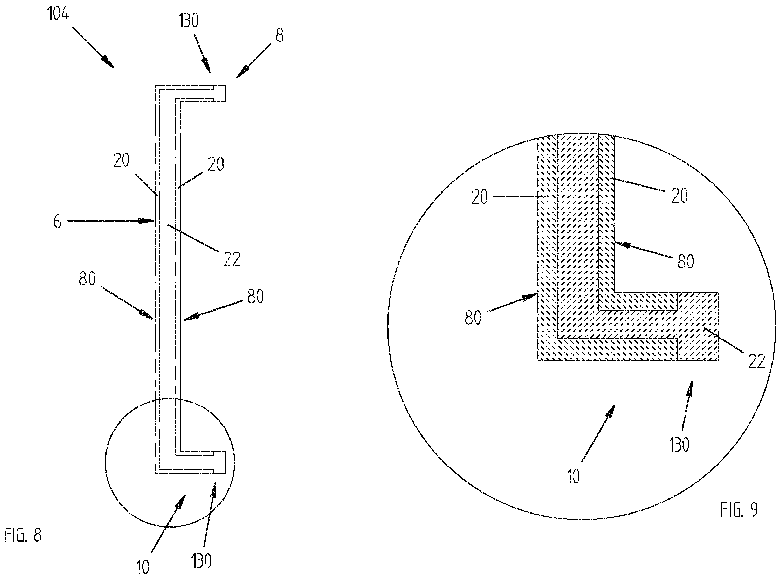

- Figure 8 shows a further embodiment of the component of Figure 1;
- Figure 9 the component of Figure 8 from another point of view;

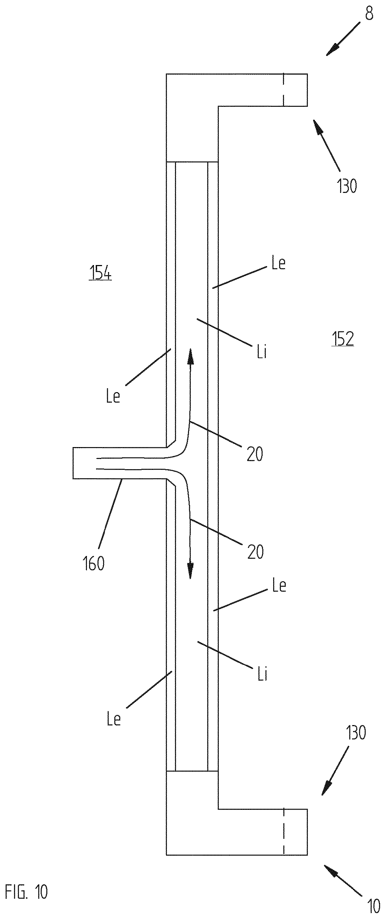

- Figure 10 is a cross section along line X°-X° of figure 8.

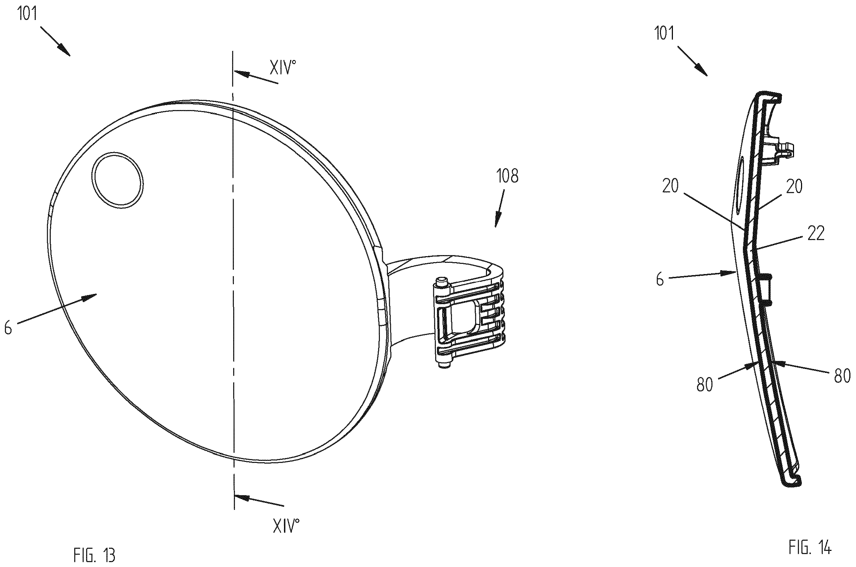

- Figure 13 shows a further embodiment of the component of Figure 1;
- Figure 14 is a cross section along line XIV°-XIV° of figure 13;

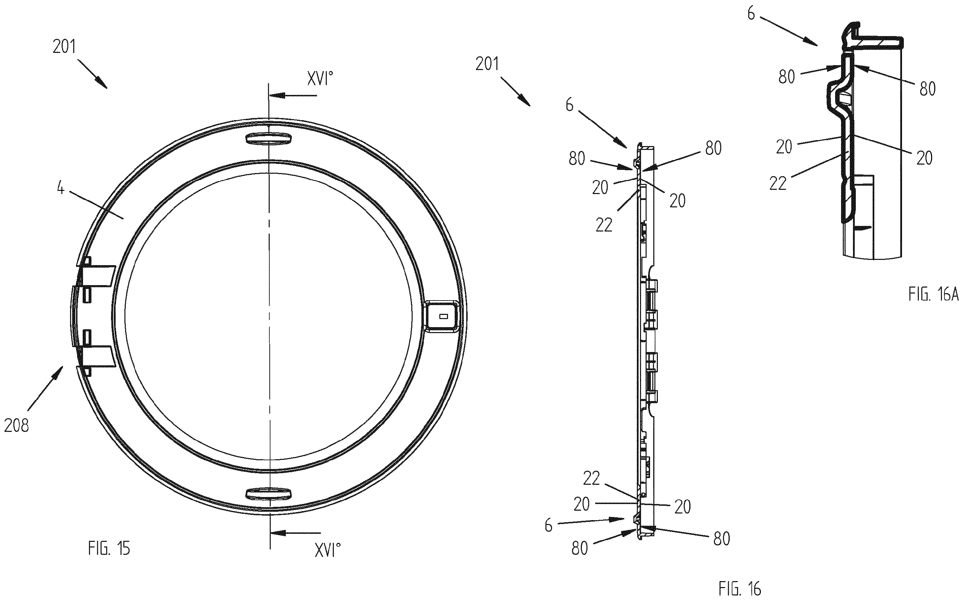

- Figure 15 shows a further embodiment of the component of Figure 1;
- Figure 16 is a cross section along line XVI°-XVI° of figure 15.
- Figure 16A is an enlarged view of a detail of figure 16.

## DETAILED DESCRIPTION OF A PREFERRED EMBODIMENT OF THE INVENTION

The present invention has proved to be particularly advantageous to produce a user control panel in washing machines, preferably laundry washing machines, as described below. It should in any case be underlined that the present invention is not limited to laundry washing machines. On the contrary, the present invention can be conveniently applied to any aesthetic component for water bearing appliances such as laundry washing machines or laundry washing-drying machines or driers or dish washing machines.

With reference to Figure 1 a first preferred embodiment of a user control panel 1 according to the invention is shown.

The user control panel 1 is preferably arranged at a frontal panel of a laundry washing machine (not shown) so that a user may select and set washing parameters, like for example the desired washing program, the washing temperature, the spinning speed, etc. The user control panel 1 preferably comprises a display 1A and/or one or more selector devices 1B, 1C, for example a push button or a touch screen, which allow to select said parameters.

The user control panel 1 preferably comprises a support body 4 and apertures 4A, 4B, 4C to which the display 1A and the selector devices 1B, 1C may be fitted.

The support body 4 preferably has a substantially planar frontal surface 6 where the display 1A and the selector devices 1B, 1C are arranged. The support body 4 then preferably comprises two mounting ribs 8, 10 suited to mount the user control panel 1 to the frontal panel of the laundry washing machine.

The planar frontal surface 6 of the support body 4 represents the surface of the user control panel 1 which is visible from outside when the user control panel 1 is assembled on the laundry washing machine.

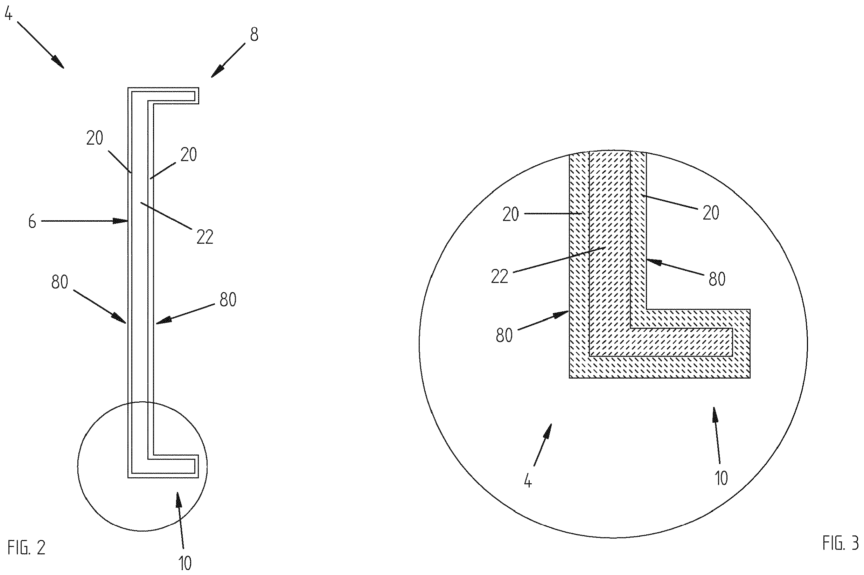

According to an aspect of the invention, the support body 4 preferably comprises a first polymeric material 20 and a second polymeric material 22, as better illustrated in figures 2 and 3.

The first polymeric material 20 constitutes the external surface 80 of the support body 4 and covers the second polymeric material 22.

In the first preferred embodiment here described, the first polymeric material 20 constitutes the overall external surface 80 of the support body 4 and completely covers the second polymeric material 22.

The second polymeric material 22 constitutes the core of the support body 4 and is completely surrounded by the first polymeric material 20.

In a further preferred embodiment, for example the embodiment better described later with reference to figures 8 to 12, the external surface of the support body is at least partially constituted by the first polymeric material and partially covers the second polymeric material. The second polymeric material constitutes the core of the support body and, in part, constitutes the external surface of the support body.

The support body 4 is preferably obtained through a continuous injection moulding process, or co-injection moulding process, wherein the first polymeric material 20 and the second polymeric material 22 are sequentially and continuously injected in a mould, as better described later. The first polymeric material 20 and the second polymeric material 22 form therefore a one-piece monolithic body.

Co-injection moulding process advantageously provides a cost-effective solution when two materials needs to be linked one to the other.

In a preferred embodiment of the invention, the first and/or the second polymeric material 20, 22 comprises polymers. Preferably, the first and/or the second polymeric material comprises a thermoplastic material.

According to an aspect of the invention, the first polymeric material 20 preferably comprises a not recycled polymeric material and the second polymeric material 22 preferably comprises a recycled polymeric material.

By the term "recycled material" it is meant that the material composing the recycled material has a lower degree of purity than that of a not recycled material.

Said recycled polymeric material preferably comprises a material deriving from post-consumer plastic and/or post-industrial plastic materials.

By the term "post-consumer plastic materials" it is meant the selected materials deriving from the separate collection of wastes, especially municipal solid wastes, preferably from packaging.

Another possible definition indicates that the "post-consumer plastic materials" are those materials which the consumer has stopped using and which may be solid, thrown away, or discharged as waste (The global Development Research Centre. Solid waste management. Glossary, http://glossaiy.eea.eui pa.eu), such as waste electrical and electronic equipment (WEEE) and waste from automotive industries.

By the term "post-industrial plastic" materials it is meant that such components are represented by industrial scraps and, i.e., by residues and/or scraps coming from or resulting from industrial processing of virgin plastic materials.

In a preferred embodiment, the recycled material deriving from plastic materials may be considered a polymeric material comprising one or more impurity chemical elements
comprising the following chemical elements: Lead (Pb); Cadmium (Cd); Mercury (Hg); Hexavalent Chromium (Cr(VI)); Bromine (Br); Antimony (Sb); Arsenic (As); wherein said one or more elements can be found in a quantity inside the recycled material above a minimum threshold.

Each impurity chemical element can be found inside the recycled material in a minimum quantity as listed below:

$$\text{Lead (Pb)} \geq 7 \text{ ppm;}$$

$$\text{Cadmium (Cd)} \geq 5 \text{ ppm;}$$

$$\text{Mercury (Hg)} \geq 0.01 \text{ ppm;}$$

$$\text{Hexavalent Chromium (Cr(VI))} \geq 10 \text{ ppm;}$$

$$\text{Bromine (Br)} \geq 5 \text{ ppm;}$$

$$\text{Antimony (Sb)} \geq 5 \text{ ppm;}$$

$$\text{Arsenic (As)} \geq 5 \text{ ppm.}$$

Each impurity chemical element can be found inside the recycled material in a quantity below a maximum threshold. Therefore, each impurity chemical element can be found inside the recycled material in a quantity which is inside a preferred range.

In preferred embodiments, the recycled material may derive from polyolefin polymers, for example Polypropylene (PP) or Polyethylene (PE), or from Styrenic polymers, for example Polystyrene (PS) or Acrylonitrile-Butadienestyrene (ABS).

When the recycled material derives from polyolefin polymers, for example, the recycled material may be considered a polymeric material comprising one or more impurity chemical elements which can be found inside the recycled material in a quantity according to table 1 below.

Table 1

| Chemical element | Broad Range (ppm) | Intermediate Range (ppm) | Strict Range (ppm) |
|---|---|---|---|
|  |  |  |  |
| Lead (Pb) | 7-1000 | 7-90 | 7-60 |
| Cadmium (Cd) | 5-100 | 5-40 | 5-20 |
| Mercury (Hg) | 0.01-1000 | 0.01-10 | 0.01-0.5 |
| Hexavalent Chromium Cr(VI) | 10-1000 | 10-100 | 10-20 |

(continued)

| Chemical element | Broad Range (ppm) | Intermediate Range (ppm) | Strict Range (ppm) |
|---|---|---|---|
| Bromine (Br) | 5-400 | 5-100 | 5-60 |
| Antimony (Sb) | 5-200 | 5-100 | 5-50 |
| Arsenic (As) | 5-1000 | 5-100 | 5-50 |

In a preferred embodiment and according to the Table 1 above, each impurity chemical element can be found inside the recycled material in a quantity below a maximum threshold as listed below:

$$\text{Lead (Pb)} \leq 60 \text{ ppm};$$

$$\text{Cadmium (Cd)} \leq 20 \text{ ppm};$$

$$\text{Mercury (Hg)} \leq 0.5 \text{ ppm};$$

$$\text{Hexavalent Chromium (Cr(VI))} \leq 20 \text{ ppm};$$

$$\text{Bromine (Br)} \leq 60 \text{ ppm};$$

$$\text{Antimony (Sb)} \leq 50 \text{ ppm};$$

$$\text{Arsenic (As)} \leq 50 \text{ ppm}.$$

Impurity chemical elements falling within these maximum thresholds guarantee a good standard in term of mechanical properties (stiffness, strength, etc.) to the component.

When the recycled material derives from styrenic polymers, for example, the recycled material may be considered a polymeric material comprising one or more impurity chemical elements which can be found inside the recycled material in a quantity according to table 2.

Table 2

| Chemical element | Broad Range (ppm) | Intermediate Range (ppm) | Strict Range (ppm) |
|---|---|---|---|
| | | | |
| Lead (Pb) | 7-1000 | 7-100 | 7-90 |
| Cadmium (Cd) | 5-100 | 5-50 | 5-40 |
| Mercury (Hg) | 0.01-1000 | 0.01-10 | 0.01-0.5 |
| Hexavalent Chromium Cr(VI) | 10-1000 | 10-200 | 10-100 |
| Bromine (Br) | 5-400 | 5-200 | 5-100 |
| Antimony (Sb) | 5-700 | 5-300 | 5-200 |
| Arsenic (As) | 5-1000 | 5-800 | 5-500 |

In a preferred embodiment and according to the Table 2 above, each impurity chemical element can be found inside the recycled material in a quantity below a maximum threshold as listed below:

$$\text{Lead (Pb)} \leq 90 \text{ ppm;}$$

$$\text{Cadmium (Cd)} \leq 40 \text{ ppm;}$$

$$\text{Mercury (Hg)} \leq 0.5 \text{ ppm;}$$

$$\text{Hexavalent Chromium (Cr(VI))} \leq 100 \text{ ppm;}$$

$$\text{Bromine (Br)} \leq 100 \text{ ppm;}$$

$$\text{Antimony (Sb)} \leq 200 \text{ ppm;}$$

$$\text{Arsenic (As)} \leq 200 \text{ ppm.}$$

Impurity chemical elements falling within these maximum thresholds guarantee a good standard in term of mechanical properties (stiffness, strength, etc.) to the component.

In a first advantageous aspect of the invention, the support body 4 may be manufactured with low cost thanks to the use of a recycled material but, at the same time, the aesthetic appearance of the support body 4 is significantly improved compared to known components thanks to the use of a not recycled material, namely the external layer of first polymeric material 20.

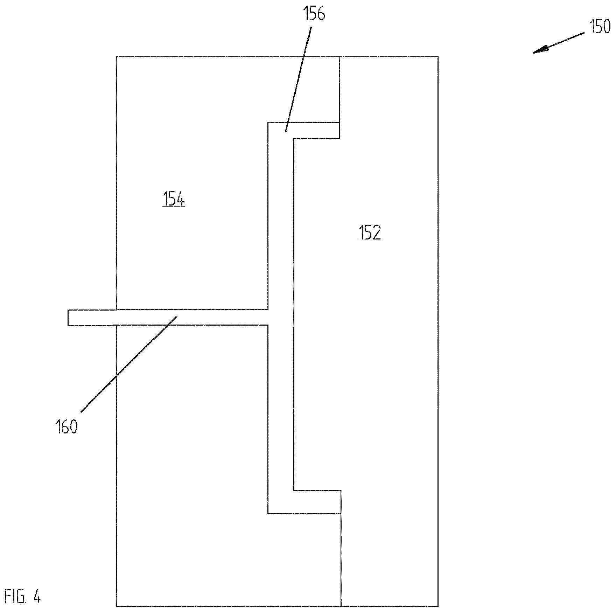

In a further advantageous aspect of the invention, the use of recycled materials to produce the component reduces the environmental impact in terms of plastic materials consumption and in terms of re-use/recycling of waste plastic materials. With reference to figures 4 to 7 a method to obtain a support body 4 according to a preferred embodiment of the invention is described.

Preferably, a moulding injection process is used to obtain the support body 4, or co-injection moulding process.

Figure 4 schematically shows a mould 150 used in a moulding injection process to obtain the support body 4.

The mould 150 preferably comprises two sides 152, 154 defining a cavity 156 with the desired shape of the support body 4. The mould 150 comprises at least one injection point/channel 160 through which molten polymeric material is forced into the mould cavity 156.

In different preferred embodiments, the mould may comprise a plurality of injection points/channels through which molten polymeric material is forced into the mould cavity.

The injection points/channels are preferably opportunely arranged to allow the more uniform distribution of the molten polymeric material inside the mould.

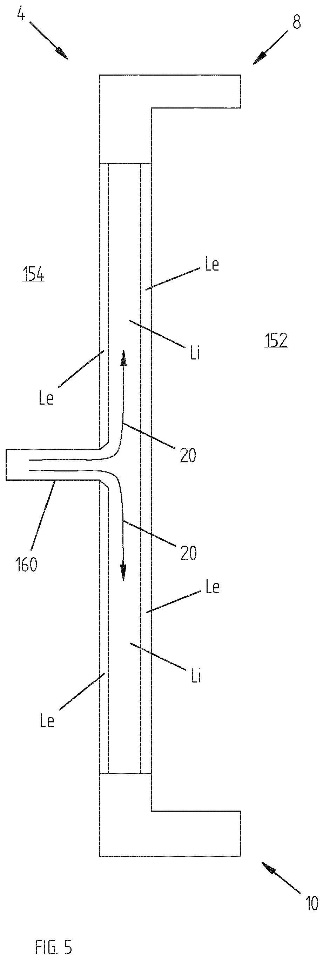

Figure 5 shows a first phase of the injection process.

A first molten polymeric material 20, preferably a not recycled polymeric material, is forced into the mould cavity 156 via the injection point/channel 160.

The first polymeric material 20 injected into the cavity 156 that touches the internal surfaces (walls) of the mould 150 cools rapidly and at least partially polymerises due to the low wall temperature of the mould 150. At this stage, as illustrated in figure 5, an external layer Le of first solidified polymeric material 20 encloses a molten core Li of first polymeric material 20.

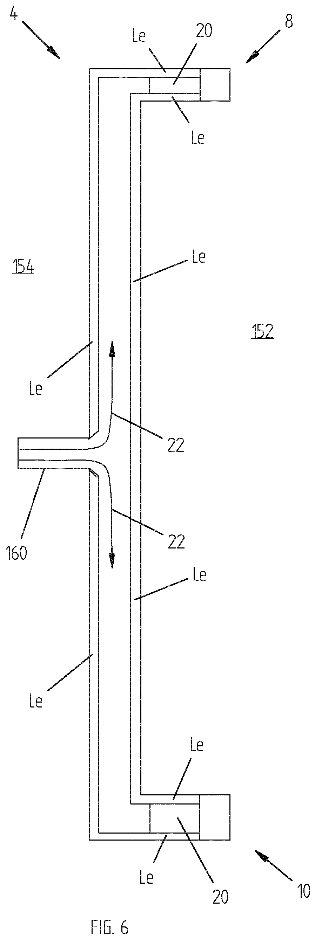

The first polymeric material 20 is injected into the cavity 156 for a first time T1. From the end of the first time T1 the second molten polymeric material 22, preferably a recycled polymeric material, is subsequentially and continuously forced into the mould cavity 156 via the injection point/channel 160, as illustrated in Figure 6.

The second polymeric material 22 injected into the cavity 156 fills the core of the cavity 156 and pushes the molten core Li of the first polymeric material 20 that reaches all remaining internal surfaces of the mould 150 where at least partially solidifies.

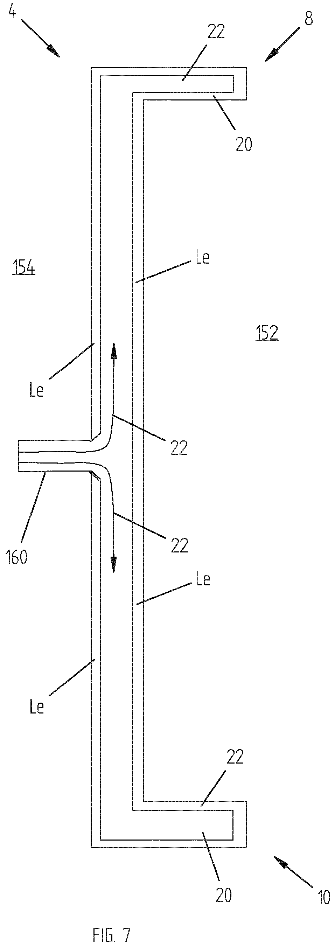

The second polymeric material 22 is injected into the cavity 156 for a second time T2. At the end of the second time T2, the second molten polymeric material 22 fills completely the core of the support body 4 and is completely surrounded by the first polymeric material 20, as illustrated in Figure 7. The first polymeric material 20, in turn, reaches all the remaining internal surfaces of the mould 150 and completely covers the second polymeric material 22.

At the end of the second time T2, the injection of material into the cavity 156 is stopped. The first polymeric material 20 and the second polymeric material 22 then completely solidified, preferably through heating of the mould 150, and the mould 150 may be finally opened and the support body 4 extracted therefrom.

It has to be noted that in the figures the first polymeric material and the second polymeric material are shown as clear separate layers. It is clear that the first polymeric material and the second polymeric material preferably partially penetrate each other for a small section so as to form a one-piece monolithic body.

Figures 8 and 9 show a further preferred embodiment of a support body 104 according to the invention. This support body 104 differs from the support body 4 previously described with reference to Figures 2 and 3 in that the external surface 80 of the support body 104 is not totally constituted by the first polymeric material 20. End portions 130 of the mounting ribs 8, 10 are constituted by the second polymeric material 22.

The first polymeric material 20, therefore, partially covers the second polymeric material 22. The second polymeric material 22 constitutes the core of the support body 104 and, in part, constitutes the external surface 80 of the support body 104. The end portions 130 constituted by the second recycled polymeric material 22 are preferably not visible from outside when the user control panel is assembled on the laundry washing machine.

With reference to figures 10 to 12 a method to obtain a support body 104 according to the second preferred embodiment of the invention is described. Preferably, a moulding injection process is used to obtain the support body 104. The same mould 150 described above is used to obtain the support body 104.

Figure 10 shows a first phase of the injection process.

A first molten polymeric material 20, preferably a not recycled polymeric material, is forced into the mould cavity 156 via the injection point/channel 160.

The first polymeric material 20 injected into the cavity 156 that touches the internal surfaces (walls) of the mould 150 cools rapidly and at least partially polymerises due to the low wall temperature of the mould 150. At this stage, as illustrated in figure 10, an external layer Le of first solidified polymeric material 20 encloses a molten core Li of first polymeric material 20.

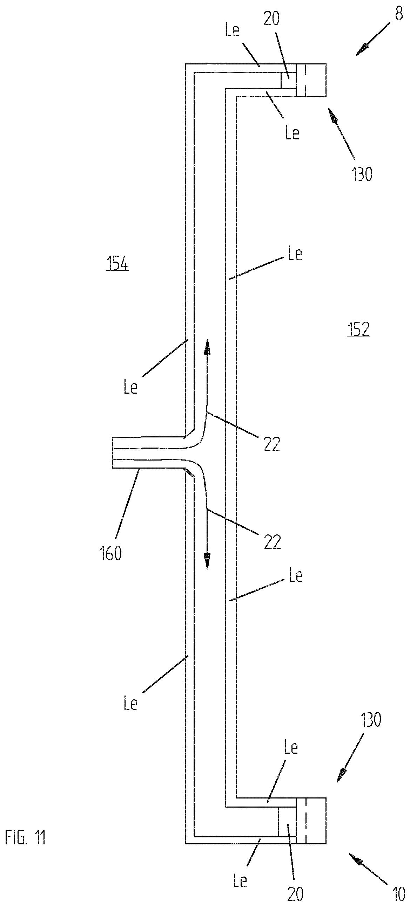

The first polymeric material 20 is injected into the cavity 156 for a first time T1'. From the end of the first time T1' the second molten polymeric material 22, preferably a recycled polymeric material, is subsequentially and continuously forced into the mould cavity 156 via the injection point/channel 160, as illustrated in Figure 11.

The second polymeric material 22 injected into the cavity 156 fills the core of the cavity 156 and pushes the molten core Li of the first polymeric material 20. All the first polymeric material 20 distributes over the internal surfaces of the mould 150 where at least partially solidifies, except for the end portions 130.

The second polymeric material 22 is injected into the cavity 156 for a second time T2'. The second polymeric material 22 reaches the end portions 130 where at least partially solidifies.

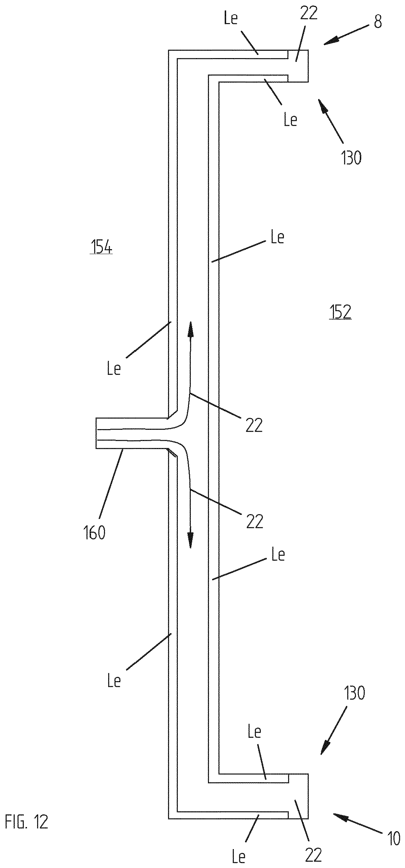

The second molten polymeric material 22 fills the core of the support body 104 and also the end portions 130, as illustrated in Figure 12.

At the end of the second time T2', the injection of material into the cavity 156 is stopped. The first polymeric material 20 and the second polymeric material 22 then completely solidified, preferably through heating of the mould 150, and the mould 150 may be finally opened and the support body 104 extracted therefrom. The method above described to obtain an aesthetic component according to the invention, for example a user interface, eventually carries out a co-injection moulding process wherein the first polymeric material and the second polymeric material are injected, one after the other, into the same mould.

With reference to Figures 13 and 14 a further preferred embodiment of a component 101 according to the invention is shown. In the drawings, corresponding characteristics and/or components compared to first preferred embodiment are identified by the same reference numbers.

The component 101 refers to a filter door 101 which is preferably arranged at a frontal side of a laundry washing machine (not shown) so that a user may easily access the filter, for example for cleaning it.

The filter door 101 preferably has a substantially planar frontal surface 6 and comprises a hinge 108 suited to mount the filter door 8 to the frontal side of the laundry washing machine.

The planar frontal surface 6 represents the surface of the filter door 101 which is visible from outside when the filter door 101 is assembled on the laundry washing machine.

According to an aspect of the invention, the filter door 101 preferably comprises a first polymeric material 20 and a second polymeric material 22, as better illustrated in figure 14.

The first polymeric material 20 constitutes the external surface 80 of the filter door 101 and covers the second polymeric material 22.

In the preferred embodiment here described, the first polymeric material 20 constitutes the overall external surface 80 of the filter door 101 and completely covers the second polymeric material 22.

The second polymeric material 22 constitutes the core of the filter door 101 and is completely surrounded by the first polymeric material 20.

The filter door 101 is preferably obtained through a continuous injection moulding process as described above with reference to the first embodiment. The filter door 101 is preferably obtained through a continuous injection moulding process wherein the first polymeric material 20 and the second polymeric material 22 are sequentially and continuously injected in a mould. With reference to Figures 15 to 16A a further preferred embodiment of a component 201 according to the invention is shown. In the drawings, corresponding characteristics and/or components compared to previous preferred embodiments are identified by the same reference numbers.

The component 201 refers to a door frame 201 which is preferably arranged at a frontal side of a laundry washing machine (not shown) so that a user may easily access the washing drum.

The door frame 201 preferably has a substantially planar annular frontal surface 6 and comprises a hinge system 208 suited to mount the door frame 201 to the frontal side of the laundry washing machine.

The planar frontal surface 6 represents the surface of the door frame 201 which is visible from outside when the door frame 201 is assembled on the laundry washing machine.

According to an aspect of the invention, the door frame 201 preferably comprises a first polymeric material 20 and a second polymeric material 22, as better illustrated in figure 16A.

The first polymeric material 20 constitutes the external surface 80 of the door frame 201 and covers the second polymeric material 22.

In the preferred embodiment here described, the first polymeric material 20 constitutes the overall external surface 80 of the door frame 201 and completely covers the second polymeric material 22.

The second polymeric material 22 constitutes the core of the door frame 201 and is completely surrounded by the first polymeric material 20.

The door frame 201 is preferably obtained through a continuous injection moulding process as described above with reference to the first embodiment. The door frame 201 is preferably obtained through a continuous injection moulding process wherein the first polymeric material 20 and the second polymeric material 22 are sequentially and continuously injected in a mould.

It has thus been shown that the present invention allows all the set objects to be achieved. In particular, it makes it possible to optimize mechanics and/or aesthetics characteristics of plastic components on the base of the type of plastic material used in the producing process.

While the present invention has been described with reference to the particular embodiments shown in the figures, it should be noted that the present invention is not limited to the specific embodiments illustrated and described herein; on the contrary, further variants of the embodiments described herein fall within the scope of the present invention, which is defined in the claims.

## Claims

1. An aesthetic component (1, 4; 104; 101; 201) for a water bearing appliance, wherein said component comprises a first polymeric material (20) and a second polymeric material (22), the external surface (80) of said component (1, 4; 104; 101; 201) being at least partially constituted by said first polymeric material (20) and said first polymeric material (20) covering said second polymeric material (22), wherein said second polymeric material (22) comprises a recycled polymeric material, **characterized in that** said recycled material comprises a polymeric material comprising one or more chemical elements of the group comprising the following chemical elements: Lead; Cadmium; Mercury; Hexavalent Chromium; Bromine; Antimony; Arsenic; wherein said one or more chemical elements are in a quantity inside said recycled material above, or equal to, a minimum threshold, wherein said minimum threshold for Lead is 7 ppm and/or said minimum threshold for Cadmium is 5 ppm and/or said minimum threshold for Mercury is 0.01 ppm and/or said minimum threshold for Hexavalent Chromium is 10 ppm and/or said minimum threshold for Bromine is 5 ppm and/or said minimum threshold for Antimony is 5 ppm and/or said minimum threshold for Arsenic is 5 ppm;

    wherein when said recycled material derives from polyolefin polymers said one or more chemical elements are in a quantity inside said recycled material below, or equal to, a maximum threshold, wherein said maximum threshold for Lead is 90 ppm and/or said maximum threshold for Cadmium is 40 ppm and/or said maximum threshold for Mercury is 10 ppm and/or said maximum threshold for Hexavalent Chromium is 100 ppm and/or said maximum threshold for Bromine is 100 ppm and/or said maximum threshold for Antimony is 100 ppm and/or said maximum threshold for Arsenic is 100 ppm,
    wherein when said recycled material derives from styrenic polymers, said one or more chemical elements are in a quantity inside said recycled material below, or equal to, a maximum threshold, wherein said maximum threshold for Lead is 100 ppm and/or said maximum threshold for Cadmium is 50 ppm and/or said maximum threshold for Mercury is 10 ppm and/or said maximum threshold for Hexavalent Chromium is 200 ppm and/or said maximum threshold for Bromine is 200 ppm and/or said maximum threshold for Antimony is 300 ppm and/or said maximum threshold for Arsenic is 800 ppm.

2.  A component (1, 4; 104; 101; 201) according to claim 1, **characterized in that** said first polymeric material (20) comprises a not recycled polymeric material.

3.  A component (1, 4; 101; 201) according to claim 1 or 2, **characterized in that** said external surface (80) of said component (1, 4) is completely constituted by said first polymeric material (20) and said first polymeric material (20) completely covers said second polymeric material (22).

4.  A component (1, 4; 104; 101; 201) according to any of the preceding claims, **characterized in that** said first polymeric material (20) and/or said second polymeric material (22) comprises polymers.

5.  A component (1, 4; 104; 101; 201) according to any of the preceding claims, **characterized in that** said first polymeric material (20) and/or said second polymeric material (22) comprises a thermoplastic material.

6.  A component (1, 4; 104; 101; 201) according to any of the preceding claims, **characterized in that** said recycled material derives from post-consumer plastic and/or post-industrial plastic materials.

7.  A component (1, 10, 12; 101) according to any of the preceding claims, **characterized in that** said recycled material derives from polyolefin polymers, wherein said one or more chemical elements can be found in a quantity inside said recycled material below, or equal to, a maximum threshold, wherein said maximum threshold for Lead is 60 ppm and/or said maximum threshold for Cadmium is 20 ppm and/or said maximum threshold for Mercury is 0.5 ppm and/or said maximum threshold for Hexavalent Chromium is 20 ppm and/or said maximum threshold for Bromine is 60 ppm and/or said maximum threshold for Antimony is 50 ppm and/or said maximum threshold for Arsenic is 50 ppm.

8.  A component (1, 10, 12; 101) according to any of the preceding claims, **characterized in that** said recycled material derives from styrenic polymers, wherein said one or more chemical elements can be found in a quantity inside said recycled material below, or equal to, a maximum threshold, wherein said maximum threshold for Lead is 90 ppm and/or said maximum threshold for Cadmium is 40 ppm and/or said maximum threshold for Mercury is 10 ppm and/or said maximum threshold for Hexavalent Chromium is 100 ppm and/or said maximum threshold for Bromine is 100 ppm and/or said maximum threshold for Antimony is 200 ppm and/or said maximum threshold for Arsenic is 200 ppm.

9.  A component (1, 4; 104; 101; 201) according to any of the preceding claims, **characterized in that** said first polymeric material (20) and said second polymeric material (22) form a one-piece monolithic body.

10. A component (1, 4; 104; 101; 201) according to any of the preceding claims, **characterized in that** said first polymeric material (20) and said second polymeric material (22) are co-injected material resulting from co-injection moulding process.

11. A component (1, 4; 104; 101; 201) according to any of the preceding claims, **characterized in that** said component (1, 4; 104; 101; 201) is one of: a casing component of said water bearing appliance, a control panel (1, 4) of said water bearing appliance.

12. Method for producing an aesthetic component (1, 4; 104; 101; 201) according to any of the preceding claims, **characterized in that** it comprises the steps of:

    - injecting from at least one injection point (160) said first polymeric material (20) into a cavity (156) of a mould (150) for a first time so that said first polymeric material (20) reaches internal surfaces of said mould (150) and at least partially solidifies to form an external solidified layer (Le);
    - injecting from said at least one injection point (160), after said first time, said second polymeric material (22) into said mould (150) for a second time so that said second polymeric material (22) fills the core of said cavity (156) and pushes the first polymeric material (20) not jet solidified.

13. Method according to claim 12, **characterized in that** said second polymeric material (22) pushes said first polymeric material (20) not jet solidified so that said first polymeric material (20) reaches all remaining internal surfaces of said mould (150) where at least partially solidifies and forms an external solidified layer (Le).

14. Method according to claim 12, **characterized in that** said second polymeric material (22) pushes said first polymeric material (20) not jet solidified so that said first polymeric material (20) reaches some remaining internal surfaces of said mould (150) where at least partially solidifies and forms an external solidified layer (Le) and so that said second polymeric material (22) reaches all remaining internal surfaces of said mould (150) where at least partially solidifies and forms an external solidified layer (Le).

## Patentansprüche

1. Ästhetische Komponente (1, 4; 104; 101; 201) für eine wasserführende Vorrichtung, wobei die Komponente ein erstes Polymermaterial (20) und ein zweites Polymermaterial (22) umfasst, wobei die Außenoberfläche (80) der Komponente (1, 4; 104; 101; 201) wenigstens zum Teil von dem ersten Polymermaterial (20) gebildet wird und das erste Polymermaterial (20) das zweite Polymermaterial (22) bedeckt, wobei das zweite Polymermaterial (22) ein recyceltes Polymermaterial umfasst, **dadurch gekennzeichnet, dass** das recycelte Material ein Polymermaterial umfasst, das ein oder mehrere chemische Elemente der Gruppe umfassend die folgenden chemischen Elemente umfasst: Blei; Cadmium; Quecksilber; sechswertiges Chrom; Brom; Antimon; Arsen; wobei das eine oder die mehreren chemischen Elemente in dem recycelten Material in einer Menge über oder gleich einem unteren Grenzwert vorhanden sind, wobei der untere Grenzwert für Blei 7 ppm beträgt und/oder der untere Grenzwert für Cadmium 5 ppm beträgt und/oder der untere Grenzwert für Quecksilber 0,01 ppm beträgt und/oder der untere Grenzwert für sechswertiges Chrom 10 ppm beträgt und/oder der untere Grenzwert für Brom 5 ppm beträgt und/oder der untere Grenzwert für Antimon 5 ppm beträgt und/oder der untere Grenzwert für Arsen 5 ppm beträgt;

   wobei, wenn das recycelte Material aus Polyolefinpolymeren stammt, das eine oder die mehreren chemischen Elemente in dem recycelten Material in einer Menge unter oder gleich einem oberen Grenzwert vorhanden sind, wobei der obere Grenzwert für Blei 90 ppm beträgt und/oder der obere Grenzwert für Cadmium 40 ppm beträgt und/oder der obere Grenzwert für Quecksilber 10 ppm beträgt und/oder der obere Grenzwert für sechswertiges Chrom 100 ppm beträgt und/oder der obere Grenzwert für Brom 100 ppm beträgt und/oder der obere Grenzwert für Antimon 100 ppm beträgt und/oder der obere Grenzwert für Arsen 100 ppm beträgt;
   wobei, wenn das recycelte Material aus Styrolpolymeren stammt, das eine oder die mehreren chemischen Elemente in dem recycelten Material in einer Menge unter oder gleich einem oberen Grenzwert vorhanden sind, wobei der obere Grenzwert für Blei 100 ppm beträgt und/oder der obere Grenzwert für Cadmium 50 ppm beträgt und/oder der obere Grenzwert für Quecksilber 10 ppm beträgt und/oder der obere Grenzwert für sechswertiges Chrom 200 ppm beträgt und/oder der obere Grenzwert für Brom 200 ppm beträgt und/oder der obere Grenzwert für Antimon 300 ppm beträgt und/oder der obere Grenzwert für Arsen 800 ppm beträgt.

2. Komponente (1, 4; 104; 101; 201) gemäß Anspruch 1, **dadurch gekennzeichnet, dass** das erste Polymermaterial (20) ein nicht recyceltes Polymermaterial umfasst.

3. Komponente (1, 4; 101; 201) gemäß Anspruch 1 oder 2, **dadurch gekennzeichnet, dass** die Außenoberfläche (80) der Komponente (1, 4) vollständig von dem ersten Polymermaterial (20) gebildet wird und das erste Polymermaterial (20) das zweite Polymermaterial (22) vollständig bedeckt.

4. Komponente (1, 4; 104; 101; 201) gemäß einem der vorstehenden Ansprüche, **dadurch gekennzeichnet, dass** das erste Polymermaterial (20) und/oder das zweite Polymermaterial (22) Polymere umfasst.

5. Komponente (1, 4; 104; 101; 201) gemäß einem der vorstehenden Ansprüche, **dadurch gekennzeichnet, dass** das erste Polymermaterial (20) und/oder das zweite Polymermaterial (22) ein thermoplastisches Material umfasst.

6. Komponente (1, 4; 104; 101; 201) gemäß einem der vorstehenden Ansprüche, **dadurch gekennzeichnet, dass** das recycelte Material aus Post-Consumer-Kunststoff und/oder postindustriellen Kunststoffmaterialien stammt.

7. Komponente (1, 10, 12; 101) gemäß einem der vorstehenden Ansprüche, **dadurch gekennzeichnet, dass** das recycelte Material aus Polyolefinpolymeren stammt, wobei das eine oder die mehreren chemischen Elemente in dem recycelten Material in einer Menge unter oder gleich einem oberen Grenzwert zu finden sind, wobei der obere Grenzwert für Blei 60 ppm beträgt und/oder der obere Grenzwert für Cadmium 20 ppm beträgt und/oder der obere Grenzwert für Quecksilber 0,5 ppm beträgt und/oder der obere Grenzwert für sechswertiges Chrom 20 ppm beträgt und/oder der obere Grenzwert für Brom 60 ppm beträgt und/oder der obere Grenzwert für Antimon 50 ppm beträgt und/oder der obere Grenzwert für Arsen 50 ppm beträgt.

**8.** Komponente (1, 10, 12; 101) gemäß einem der vorstehenden Ansprüche, **dadurch gekennzeichnet, dass** das recycelte Material aus Styrolpolymeren stammt, wobei das eine oder die mehreren chemischen Elemente in dem recycelten Material in einer Menge unter oder gleich einem oberen Grenzwert zu finden sind, wobei der obere Grenzwert für Blei 90 ppm beträgt und/oder der obere Grenzwert für Cadmium 40 ppm beträgt und/oder der obere Grenzwert für Quecksilber 10 ppm beträgt und/oder der obere Grenzwert für sechswertiges Chrom 100 ppm beträgt und/oder der obere Grenzwert für Brom 100 ppm beträgt und/oder der obere Grenzwert für Antimon 200 ppm beträgt und/oder der obere Grenzwert für Arsen 200 ppm beträgt.

**9.** Komponente (1, 4; 104; 101; 201) gemäß einem der vorstehenden Ansprüche, **dadurch gekennzeichnet, dass** das erste Polymermaterial (20) und das zweite Polymermaterial (22) einen einstückigen monolithischen Körper bilden.

**10.** Komponente (1, 4; 104; 101; 201) gemäß einem der vorstehenden Ansprüche, **dadurch gekennzeichnet, dass** das erste Polymermaterial (20) und das zweite Polymermaterial (22) gemeinsam gespritztes Material sind, das durch ein Co-Spritzgussverfahren gebildet ist.

**11.** Komponente (1, 4; 104; 101; 201) gemäß einem der vorstehenden Ansprüche, **dadurch gekennzeichnet, dass** die Komponente (1, 4; 104; 101; 201) eines ist von: einer Gehäusekomponente der wasserführenden Vorrichtung, einem Bedienfeld (1, 4) der wasserführenden Vorrichtung.

**12.** Verfahren zur Herstellung einer ästhetischen Komponente (1, 4; 104; 101; 201) gemäß einem der vorstehenden Ansprüche, **dadurch gekennzeichnet, dass** es die Schritte umfasst:

- von wenigstens einem Einspritzpunkt (160) Einspritzen des ersten Polymermaterials (20) in einen Hohlraum (156) eines Formwerkzeugs (150) für ein erstes Mal, so dass das erste Polymermaterial (20) Innenoberflächen des Formwerkzeugs (150) erreicht und wenigstens teilweise erstarrt, um eine äußere erstarrte Schicht zu bilden (Le);
- von dem wenigstens einem Einspritzpunkt (160), nach dem ersten Mal, Einspritzen des zweiten Polymermaterials (22) in das Formwerkzeug (150) für ein zweites Mal, so dass das zweite Polymermaterial (22) den Kern des Hohlraums (156) füllt und das noch nicht erstarrte erste Polymermaterial (20) drückt.

**13.** Verfahren gemäß Anspruch 12, **dadurch gekennzeichnet, dass** das zweite Polymermaterial (22) das noch nicht erstarrte erste Polymermaterial (20) so drückt, dass das erste Polymermaterial (20) alle verbleibenden Innenoberflächen des Formwerkzeugs (150) erreicht, wo es wenigstens teilweise erstarrt und eine äußere erstarrte Schicht (Le) bildet.

**14.** Verfahren gemäß Anspruch 12, **dadurch gekennzeichnet, dass** das zweite Polymermaterial (22) das noch nicht erstarrte erste Polymermaterial (20) so drückt, dass das erste Polymermaterial (20) manche verbleibenden Innenoberflächen des Formwerkzeugs (150) erreicht, wo es wenigstens teilweise erstarrt und eine äußere erstarrte Schicht (Le) bildet, und dass das zweite Polymermaterial (22) alle verbleibenden Innenoberflächen des Formwerkzeugs (150) erreicht, wo es wenigstens teilweise erstarrt und eine äußere erstarrte Schicht (Le) bildet.

## Revendications

**1.** Composant esthétique (1, 4 ; 104 ; 101 ; 201) pour un appareil contenant de l'eau, ledit composant comprenant un premier matériau polymère (20) et un deuxième matériau polymère (22), la surface externe (80) dudit composant (1, 4 ; 104 ; 101 ; 201) étant au moins partiellement constituée par ledit premier matériau polymère (20) et ledit premier matériau polymère (20) recouvrant ledit deuxième matériau polymère (22), ledit deuxième matériau polymère (22) comprenant un matériau polymère recyclé, **caractérisé en ce que** ledit matériau recyclé comprend un matériau polymère comprenant un ou plusieurs éléments chimiques du groupe comprenant les éléments chimiques suivants : plomb ; cadmium ; mercure ; chrome hexavalent ; brome ; antimoine ; arsenic ; dans lequel ledit ou lesdits éléments chimiques se trouvent à l'intérieur dudit matériau recyclé dans une quantité supérieure ou égale à un seuil minimal, dans lequel ledit seuil minimal pour le plomb est de 7 ppm et/ou ledit seuil minimal pour le cadmium est de 5 ppm et/ou ledit seuil minimal pour le mercure est de 0,01 ppm et/ou ledit seuil minimal pour le chrome hexavalent est de 10 ppm et/ou ledit seuil minimal pour le brome est de 5 ppm et/ou ledit seuil minimal pour l'antimoine est de 5 ppm et/ou ledit seuil minimal pour l'arsenic est de 5 ppm ;

dans lequel, quand ledit matériau recyclé est issu de polymères polyoléfiniques, ledit ou lesdits éléments chimiques se trouvent à l'intérieur dudit matériau recyclé dans une quantité inférieure ou égale à un seuil maximal, dans lequel ledit seuil maximal pour le plomb est de 90 ppm et/ou ledit seuil maximal pour le cadmium est de 40 ppm et/ou ledit seuil maximal pour le mercure est de 10 ppm et/ou ledit seuil maximal pour le chrome hexavalent est de 100 ppm et/ou ledit seuil maximal pour le brome est de 100 ppm et/ou ledit seuil maximal pour l'antimoine est de 100 ppm et/ou ledit seuil maximal pour l'arsenic est de 100 ppm,

dans lequel, quand ledit matériau recyclé est issu de polymères styréniques, ledit ou lesdits éléments chimiques se trouvent à l'intérieur dudit matériau recyclé dans une quantité inférieure ou égale à un seuil maximal, dans lequel ledit seuil maximal pour le plomb est de 100 ppm et/ou ledit seuil maximal pour le cadmium est de 50 ppm et/ou ledit seuil maximal pour le mercure est de 10 ppm et/ou ledit seuil maximal pour le chrome hexavalent est de 200 ppm et/ou ledit seuil maximal pour le brome est de 200 ppm et/ou ledit seuil maximal pour l'antimoine est de 300 ppm et/ou ledit seuil maximal pour l'arsenic est de 800 ppm.

2. Composant (1, 4 ; 104 ; 101 ; 201) selon la revendication 1, **caractérisé en ce que** ledit premier matériau polymère (20) comprend un matériau polymère non recyclé.

3. Composant (1, 4 ; 101 ; 201) selon la revendication 1 ou 2, **caractérisé en ce que** ladite surface externe (80) dudit composant (1, 4) est entièrement constituée par ledit premier matériau polymère (20) et ledit premier matériau polymère (20) recouvre entièrement ledit deuxième matériau polymère (22).

4. Composant (1, 4 ; 104 ; 101 ; 201) selon l'une quelconque des revendications précédentes, **caractérisé en ce que** ledit premier matériau polymère (20) et/ou ledit deuxième matériau polymère (22) comprennent des polymères.

5. Composant (1, 4 ; 104 ; 101 ; 201) selon l'une quelconque des revendications précédentes, **caractérisé en ce que** ledit premier matériau polymère (20) et/ou ledit deuxième matériau polymère (22) comprennent un matériau thermoplastique.

6. Composant (1, 4 ; 104 ; 101 ; 201) selon l'une quelconque des revendications précédentes, **caractérisé en ce que** ledit matériau recyclé est issu de matériaux plastiques post-consommation et/ou de matériaux plastiques post-industriels.

7. Composant (1, 10, 12 ; 101) selon l'une quelconque des revendications précédentes, **caractérisé en ce que** ledit matériau recyclé est issu de polymères polyoléfiniques, dans lequel ledit ou lesdits éléments chimiques peuvent se trouver à l'intérieur dudit matériau recyclé dans une quantité inférieure ou égale à un seuil maximal, dans lequel ledit seuil maximal pour le plomb est de 60 ppm et/ou ledit seuil maximal pour le cadmium est de 20 ppm et/ou ledit seuil maximal pour le mercure est de 0,5 ppm et/ou ledit seuil maximal pour le chrome hexavalent est de 20 ppm et/ou ledit seuil maximal pour le brome est de 60 ppm et/ou ledit seuil maximal pour l'antimoine est de 50 ppm et/ou ledit seuil maximal pour l'arsenic est de 50 ppm.

8. Composant (1, 10, 12 ; 101) selon l'une quelconque des revendications précédentes, **caractérisé en ce que** ledit matériau recyclé est issu de polymères styréniques, dans lequel ledit ou lesdits éléments chimiques peuvent se trouver à l'intérieur dudit matériau recyclé dans une quantité inférieure ou égale à un seuil maximal, dans lequel ledit seuil maximal pour le plomb est de 90 ppm et/ou ledit seuil maximal pour le cadmium est de 40 ppm et/ou ledit seuil maximal pour le mercure est de 10 ppm et/ou ledit seuil maximal pour le chrome hexavalent est de 100 ppm et/ou ledit seuil maximal pour le brome est de 100 ppm et/ou ledit seuil maximal pour l'antimoine est de 200 ppm et/ou ledit seuil maximal pour l'arsenic est de 200 ppm.

9. Composant (1, 4 ; 104 ; 101 ; 201) selon l'une quelconque des revendications précédentes, **caractérisé en ce que** ledit premier matériau polymère (20) et ledit deuxième matériau polymère (22) forment un corps monolithique monobloc.

10. Composant (1, 4 ; 104 ; 101 ; 201) selon l'une quelconque des revendications précédentes, **caractérisé en ce que** ledit premier matériau polymère (20) et ledit deuxième matériau polymère (22) constituent un matériau co-injecté résultant d'un procédé de moulage par co-injection.

11. Composant (1, 4 ; 104 ; 101 ; 201) selon l'une quelconque des revendications précédentes, **caractérisé en ce que** ledit composant (1, 4 ; 104 ; 101 ; 201) en est un parmi : un composant de carcasse dudit appareil contenant de l'eau, un panneau de commande (1, 4) dudit appareil contenant de l'eau.

**12.** Procédé de production d'un composant esthétique (1, 4 ; 104 ; 101; 201) selon l'une quelconque des revendications précédentes, **caractérisé en ce qu'**il comprend les étapes suivantes :

- injection, depuis au moins un point d'injection (160), dudit premier matériau polymère (20) dans une cavité (156) d'un moule (150) pendant un premier temps de telle sorte que ledit premier matériau polymère (20) atteigne des surfaces internes dudit moule (150) et se solidifie au moins partiellement pour former une couche externe solidifiée (Le) ;
- injection, depuis ledit au moins un point d'injection (160), après ledit premier temps, dudit deuxième matériau polymère (22) dans ledit moule (150) pendant un deuxième temps de telle sorte que ledit deuxième matériau polymère (22) remplisse le cœur de la cavité (156) et pousse le premier matériau polymère (20) pas encore solidifié.

**13.** Procédé selon la revendication 12, **caractérisé en ce que** ledit deuxième matériau polymère (22) pousse ledit premier matériau polymère (20) pas encore solidifié de telle sorte que ledit premier matériau polymère (20) atteint toutes les surfaces internes restantes dudit moule (150) où il se solidifie au moins partiellement et forme une couche externe solidifiée (Le).

**14.** Procédé selon la revendication 12, **caractérisé en ce que** ledit deuxième matériau polymère (22) pousse ledit premier matériau polymère (20) pas encore solidifié de telle sorte que ledit premier matériau polymère (20) atteint certaines surfaces internes restantes dudit moule (150) où il se solidifie au moins partiellement et forme une couche externe solidifiée (Le) et de telle sorte que ledit deuxième matériau polymère (22) atteint toutes les surfaces internes restantes dudit moule (150) où il se solidifie au moins partiellement et forme une couche externe solidifiée (Le).

FIG. 1

FIG. 3

FIG. 2

150

152

156

154

160

FIG. 4

FIG. 5

FIG. 6

FIG. 7

FIG. 9

FIG. 8

8

130

154

Le

Le

Li

152

Le

20

20

160

Le

Li

Le

130

10

FIG. 10

Le   20   8

Le

130

154

Le

152

Le

22

160   22

Le

130

Le

FIG. 11   Le

Le   20   10

FIG. 12

FIG. 13

FIG. 14

101

108

6

XIV°

XIV°

101

20

20

22

6

80

80

26

EP 3 868 539 B1

201

XVI°

4

208

FIG. 15

XVI°

201

6

80

80

20

20

22

FIG. 16

22

20

20

6

80

80

6

80

80

20

20

22

FIG. 16A

EP 3 868 539 B1

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08207193 A
- EP 1685786 B1
- WO 2014152014 A1